# EUROPEAN PATENT SPECIFICATION

(11) **EP 0 679 873 B1**
(45) Date of publication and mention of the grant of the patent: **11.07.2001**
(21) Application number: 95104664.8
(22) Date of filing: 29.03.1995
(51) Int. Cl.: G01F 1/44, G01F 7/00

(54) **Variable critical flow venturi**
Veränderbarer Venturiabschnitt für kritische Strömungen
Venturi variable pour écoulement critique

(30) Priority: 30.04.1994 JP 11443494
(43) Date of publication of application: 02.11.1995
(73) Proprietor: HORIBA, LTD., Minami-ku Kyoto (JP)
(72) Inventor: Shimizu, Sumio, Shiga Prefecture (JP); Ohashi, Hideki, Minami-ku, Kyoto (JP); Yamada, Shinsaku, Minami-ku, Kyoto (JP)
(74) Representative: Müller, Frithjof E., Dipl.-Ing.

(56) References cited:
- EP-A- 0 205 204
- US-A- 3 896 670

## Description

The present invention relates to a variable critical flow venturi as stated in the preamble of claim 1 for controlling a flow rate of gases, such as analyzing gas, to an appointed value.

Conventionally, in a critical flow venturi (CFV) comprising a tube and a movable member, a tapered slide bar (needle) is used as said movable member. Said slide bar is inserted into a throat portion along an axial direction of said venturi tube and can be dislocated for changing an area through which gases can flow through said throat portion, whereby controlling the flow rate of said gases to said appointed value. Such an arrangement is disclosed, for instance, in US patent no. 3896670.

The slide bar is tapered in such a manner that a diameter of the outer circumferential surface thereof successively changes, so that an accuracy in a constant-flow rate control of the gases is dependent upon an accuracy in a control of the position of the slide bar. Consequently, in spite of using a stepping motor for controlling a dislocated position of the slide bar, it is impossible to eliminate a shift of the slide bar in position and suppress a hysteresis to zero, so that it is difficult to control a position of the slide bar in high accuracy and thus it is difficult to obtain an accurate constant-flow rate value (venturi coefficient) of gas.

The present invention has been achieved in view of the above described matters and it is an object of the present invention to provide a variable critical flow venturi capable of improving a controlling accuracy of a movable member provided in a venturi tube in position.

In order to achieve the above described object, said variable critical flow venturi according to the present invention comprising a venturi tube smoothly reducing a sectional area of passage thereof along a flow direction of gas to arrive at a throat portion having the minimum sectional area and then smoothly increasing said sectional area of passage thereof along said flowing direction from said throat portion, and a movable member dislocatably provided along an axial direction of the venturi tube within the venturi tube, is characterized in that an outer circumferential surface of said movable member has a multi-stepped shape comprising a plurality of cylindrical portions different in diameter and a plurality of truncated conical portions connecting said cylindrical portions.

The movable member provided within the venturi tube is dislocated in said axial direction of the venturi tube so that one of the cylindrical portions on said outer circumferential surface of the movable member may be positioned in the throat portion. At this time, a length along the axial direction of the cylindrical portion composes an allowable range allowing a positional shift of the movable member relative to the throat portion, so that, even if the movable member is shifted in position, an area, through which gases pass through the throat portion can be made constant so long as the movable member is positioned within said allowable range. Consequently, even if the movable member is roughly controlled in position, the accurate constant-flow rate value of gas can be easily obtained.

In addition, the respective cylindrical portions are multi-steppedly connected with giving different diameters to the outer circumferential surfaces thereof through the conical portions different in diameter of the outer circumferential surface, and furthermore, as above described, the respective cylindrical portions include the above described allowable range, so that, by the dislocating operation of the movable member, the flow rate value of gas can be suitably changed to the accurate appointed one.

In the drawings:
**Figure 1** is a total block diagram of a first preferred embodiment of the present invention;
**Figure 2** is a block diagram showing principal parts in said first preferred embodiment;
**Figure 3** is a block diagram showing an operation of a movable member in the above described first preferred embodiment; and
**Figure 4** is a total block diagram showing a second preferred embodiment of the present invention.

The preferred embodiments of the present invention will be below described with reference to the drawings.

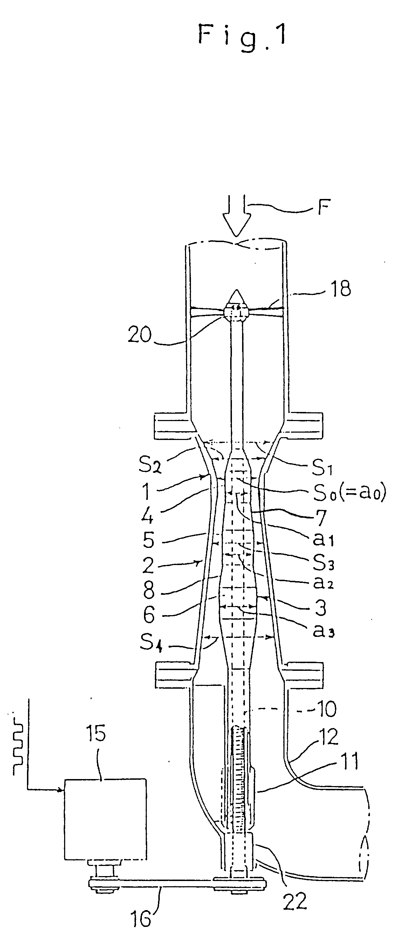

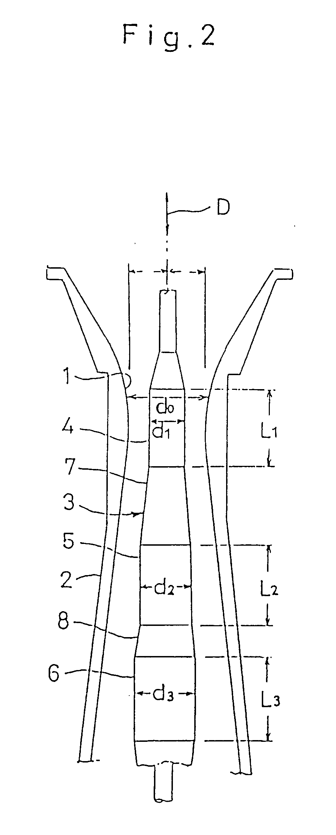

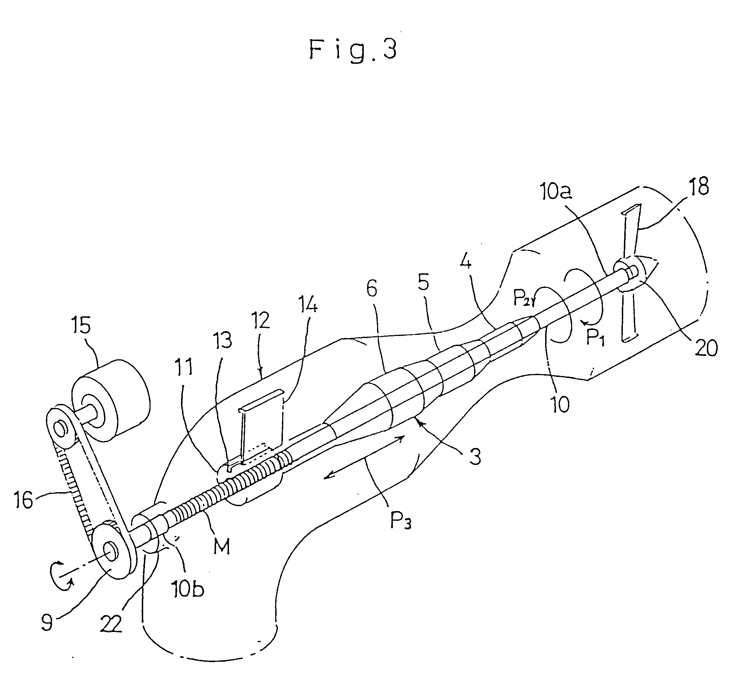

Figures 1 to 3 show a first preferred embodiment of the present invention.

Referring to Figures 1 to 3, a variable critical flow venturi comprises: a venturi tube 2 smoothly reducing sectional area S₁, S₂ of a passage thereof along a direction of a gas passage F (flow direction of gas) to arrive at a throat portion 1 having the minimum sectional area S₀ (S₁ > S₂ > S₀) and then smoothly increasing said sectional areas S₃, S₄ (S₃ < S₄) of the passage thereof along said flow direction from said throat portion 1, and a movable member 3 dislocatably provided along an axial direction D of the venturi tube 2 within the venturi tube 2. An outer circumferential surface of said movable member 3 has a three-stepped shape comprising three pieces of cylindrical portions 4, 5, 6 different in diameter and truncated conical portions 7, 8 connecting said respective cylindrical portions 4, 5, 6.

In addition, an inside diameter of the throat portion 1 is d₀ and a sectional area of the throat portion 1 is a₀ (= S₀) while outer circumferential diameters of the cylindrical portions 4, 5, 6 are set at d₁, d₂, d₃, respectively. Here, d₁ < d₂ < d₃ < d₀ and a₁ < a₂ < a₃ < a₀ hold good.

Furthermore, lengths along said axial direction D of the cylindrical portions 4, 5, 6 are set at L₁, L₂, L₃, respectively, and these lengths L₁, L₂, L₃ compose an allowable range allowing a shift of the movable member 3 relative to the throat portion 1 in position.

Further, the present preferred embodiment has a construction that a rotary shaft 10 is inserted into the movable member 3 along the axial direction D.

Besides, a male screw M having a length corresponding to a dislocation of the movable member 3 is provided on an outer circumferential surface of said shaft 10 and a female screw W (not shown) screwed on said male screw M is provided on an inner circumferential surface of a rear end portion 11 of the movable member 3.

A concave portion 13 is formed along the axial direction D on an outer circumferential surface of said rear end portion 11 to be engaged with a projection 14 formed on an inner circumferential surface of a piping 12.

Consequently, the above described construction leads to a conversion of rotary movements P₁, P₂ of the shaft 10 to a reciprocal linear movement P₃ of the movable member 3.

Reference numeral 15 designates a motor (for example pulse motor, DC motor and the like), reference numeral 16 designating a belt, and reference numeral 9 designating a pulley mounted on a rear end portion of the shaft 10.

In addition, a front end 10a of the shaft 10 is inserted into a bearing 20 supported by a support arm 18 provided in said piping 12 while a rear portion 10b ofthe shaft 10 is inserted into a bearing 22 supported by the piping 12.

The present preferred embodiment has the above described construction, so that, in case the cylindrical portion 4 is moved to a position of the throat portion 1, an area A₁, through which the gas passes in the throat portion 1, is expressed by an expression A₁ = a₀ - a₁.

Furthermore, in case the cylindrical portion 5 is moved to a position of the throat portion 1, an area A₂, through which the gas passes in the throat portion 1, is expressed by an expression A₂ = a₀ - a₂.

Additionally, in case the cylindrical portion 6 is moved to a position of the throat portion 1, an area A₃, through which the gas passes in the throat portion 1, is expressed by an expression A₃ = a₀ - a₃.

As above described, said areas, through which the gas passes in the throat portion 1, are set at A₁, A₂ and A₃, respectively, and thus three kinds of different venturi coefficients can be easily obtained and additionally the flow rate value of gas can be suitably changed to the accurate constant-flow rate value by merely conduction the dislocating operation of the movable member 3 in correspondence to the dislocated position of the movable member 3 relative to the throat portion 1.

That is to say, according to the present preferred embodiment, the movable member 3 provided within the venturi tube 2 is dislocated in the axial direction D of the venturi tube 2, whereby one of the cylindrical portions 4, 5, 6 on the outer circumferential surface of the movable member is positioned at the throat portion 1. For example, the length L₁ along the axial direction D of the cylindrical portion 4 composes said allowable range allowing said shift of the movable member 3 relative to the throat portion 1 in position, so that, even if the movable member 3 is shifted in position, the area, through which the gas passing through the throat portion 1, can be made constant so long as the movable member 3 is positioned within the allowable range. Consequently, even if the movable member 3 is roughly controlled in position, the accurate constant-flow rate value of gas can be easily obtained.

In addition, the respective cylindrical portions 4, 5, 6 are three-steppedly connected through the truncated conical portions 7, 8, different in diameter of the outer circumferential surface with giving said different diameters d₁, d₂, d₃ of the outer circumferential surface, and include the allowable range L₁, L₂, L₃, respectively, as above described, so that the flow rate value of gas can be suitably changed to the accurate appointed flow rate value.

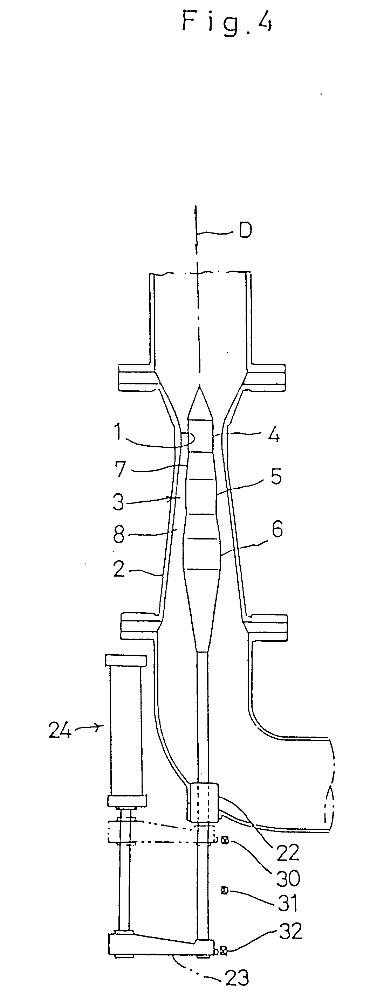

Figure 4 shows a second preferred embodiment of the present invention in which the movable member 3 provided with the cylindrical portions 4, 5, 6 and the truncated conical portions 7, 8 is dislocated by the use of a cylinder 24.

According to the second preferred embodiment, the movable member 3 can be dislocated in the axial direction D through an interlocking member 23 interlocked with a reciprocal linear movement of said cylinder 24, so that a mechanism converting said rotary movement of the shaft 10 as in the above described first preferred embodiment to said reciprocal linear movement can be made dispensable. Consequently, an advantage occurs in that the dislocating operation of the movable member 3 can be conducted more easily as compared with that in a double structure including the rotary shaft 10 according to the above described first preferred embodiment. Moreover, the movable member 3 according to said second preferred embodiment may have a solid inside. Furthermore, reference numerals 30, 31, 32 designate a position-detecting sensor of the movable member 3.

Besides, although the three-steppedly switchable movable member was shown in the above described respective preferred embodiments, the movable member is not limited by it but the present invention can be applied also to n-steppedly switchable (n is a natural number of 2 or more) movable members.

As above described, according to the present invention, the movable member provided within the venturi tube is dislocated in the axial direction of the venturi tube, whereby one of the cylindrical portions on the outer circumferential surface of the movable member is positioned at the throat portion. At this time, the length along the axial direction of the cylindrical portion composes the allowable range allowing the shift of the movable member relative to the throat portion in position, so that, even if the movable member is shifted in position, the area, through which the gas passes through the throat portion, can be made constant so long as the movable member is positioned within the allowable range. Consequently, even if the movable member is roughly controlled in position, the accurate constant-flow rate value of gas can be easily obtained.

In addition, the respective cylindrical portions are multi-steppedly connected through the truncated conical portions, different in diameter of the outer circumferential surface with giving the different diameters of the outer circumferential surface, and include the allowable range, respectively, as above described, so that the flow rate value of gas can be suitably changed to the accurate appointed flow rate value.

## Claims

1. A variable critical flow venturi, comprising a venturi tube (2) smoothly reducing a sectional area of passage thereof along a flowing direction (F) of gas to arrive at a throat portion (1) having the minimum sectional area and then smoothly increasing said sectional area of passage thereof along said flowing direction (F) from said throat portion (1), and a movable member (3) dislocatably provided along an axial direction of the venturi tube (2) within the venturi tube (2) **characterized in that** an outer circumferential surface of said movable member (3) has a multi-stepped shape comprising a plurality of cylindrical portions (4, 5, 6) different in diameter and a plurality of truncated conical portions (7, 8) connecting said cylindrical portions (4, 5, 6).

2. The variable critical flow venturi as claimed in claim 1, **characterized in that** a rotary shaft (10) is screwed in an inside of the movable member (3) along an axial direction of the movable member (3) and a motor (15) is interlockedly connected with a rear end portion of said rotary shaft (10) so that the movable member (3) may be dislocated in said axial direction thereof by a rotary movement of the rotary shaft (10).

3. The variable critical flow venturi as claim in claim 1, **characterized in that** the movable member (3) is provided with an interlocking member (23) in a rear end portion thereof and a cylinder (24) is connected with said interlocking member (23) so that the movable member (3) may be dislocated in an axial direction thereof by a reciprocal linear movement of said cylinder (24).

## Patentansprüche

1. Venturianordnung für variable kritische Strömungen, mit einem Venturirohr (2), dessen Kanalquerschnittsfläche sich entlang der Gasströmungsrichtung (F) gleichmäßig verringert, um an einem Verengungsabschnitt (1) mit minimaler Querschnittsfläche anzulangen, wobei dann diese Kanalquerschnittsfläche desselben entlang der Strömungsrichtung (F) ausgehend vom Verengungsabschnitt (1) gleichmäßig zunimmt, und einem verstellbaren Element (3), das entlang der axialen Richtung des Venturirohrs (2) in diesem verschiebbar vorhanden ist, **dadurch gekennzeichnet, dass** die Außenumfangsfläche des verstellbaren Elements (3) eine mehrstufige Form mit mehreren zylindrischen Abschnitten (4, 5, 6) mit verschiedenen Durchmessern und mehreren Kegelstumpfabschnitten (7, 8), die die zylindrischen Abschnitte (4, 5, 6) verbinden, aufweist.

2. Venturianordnung für veränderbare, kritische Strömungen nach Anspruch 1, **dadurch gekennzeichnet, dass** in das Innere des verstellbaren Elements (3) entlang der axialen Richtung desselben eine drehbare Achse (10) eingeschraubt ist und ein Motor (15) in gekoppelter Weise mit dem Hinterendeabschnitt dieser drehbaren Achse (10) verbunden ist, so dass das verstellbare Element (3) durch eine Drehbewegung der drehbaren Achse (10) in der axialen Richtung verstellbar ist.

3. Venturianordnung für veränderbare, kritische Strömungen nach Anspruch 1, **dadurch gekennzeichnet, dass** das verstellbare Element (3) an seinem Hinterendeabschnitt mit einem Kopplungselement (23) versehen ist und mit diesem Kopplungselement (23) ein Zylinder (24) verbunden ist, so dass das verstellbare Element (3) durch eine lineare Hin- und Herbewegung des Zylinders (24) in axialer Richtung verstellt werden kann.

## Revendications

1. Venturi à régime critique variable, comprenant un tube de Venturi (2) dont la surface de section transversale de passage se réduit de façon régulière dans une direction d'écoulement (F) d'un gaz de façon à arriver au niveau d'une partie d'étranglement (1) ayant la surface de section transversale minimale, puis dont ladite surface de section transversale de passage augmente régulièrement dans ladite direction d'écoulement (F) à partir de ladite partie d'étranglement (1), et un élément mobile (3) disposé de façon à pouvoir être déplacé dans une direction axiale du tube de Venturi (2) à l'intérieur du tube de Venturi (2), caractérisé en ce qu'une surface circonférentielle extérieure dudit élément mobile (3) a une forme à épaulements multiples comprenant une pluralité de parties cylindriques (4, 5, 6) de diamètre différent et une pluralité de parties tronconiques (7, 8) raccordant lesdites parties cylindriques (4, 5, 6).

2. Venturi à régime critique variable selon la revendication 1, caractérisé en ce qu'un arbre rotatif (10) est vissé dans un intérieur de l'élément mobile (3) dans une direction axiale de l'élément mobile (3), et en ce qu'un moteur (15) est raccordé par verrouillage mutuel avec une partie d'extrémité arrière dudit arbre rotatif (10), de telle sorte que l'élément mobile (3) puisse être déplacé dans ladite direction axiale de celui-ci par un mouvement de rotation de l'arbre rotatif (10).

3. Venturi à régime critique variable selon la revendication 1, caractérisé en ce que l'élément mobile (3) comporte un élément de verrouillage mutuel (23) dans une partie arrière de celui-ci et en ce qu'un cylindre (24) est raccordé audit élément de verrouillage mutuel (23), de telle sorte que l'élément mobile (3) puisse être déplacé dans une direction axiale de celui-ci par un mouvement linéaire de va-et-vient dudit cylindre (24).
